# EUROPEAN PATENT APPLICATION

(11) **EP 2 026 626 A1**
(43) Date of publication of application: **18.02.2009**
(21) Application number: 08160416.7
(22) Date of filing: 15.07.2008
(51) Int. Cl.: H04W 76/00

(54) **Apparatuses, methods and system for Service Flow Management in a Broadband Wireless Communication System**

(30) Priority: 19.07.2007 KR 20070072148
(71) Applicant: Samsung Electronics Co., Ltd., Suwon-si Gyeonggi-do (KR)
(72) Inventor: Kim, Ki-Back, Bundang-gu, Seongnam-si Gyeonggi-do (KR); Lee, Han-Kyung, Singal-dong, Gilheung-gu, Yongin-si Gyeonggi-do (KR)
(74) Representative: Grünecker, Kinkeldey, Stockmair & Schwanhäusser Anwaltssozietät

(57) **Abstract**

An apparatus and method for Service SF Flow management in a broadband wireless communication system are provided. The apparatus includes a creator for creating a SF management message including a plurality of SF identifiers to perform the same management for a plurality of SFs, and a transmitter for transmiting the management message created in the creator to an opponent node.

## Description

### BACKGROUND OF THE INVENTION

### 1. Field of the Invention:

The present invention relates to a broadband wireless communication system. More particularly, the present invention relates to an apparatus and method for adding, changing, or deleting a Service Flow (SF) in a broadband wireless communication system.

### 2. Description of the Related Art:

In 4th-Generation (4G) communication systems, which are the next generation communication systems, studies have been actively conducted to provide users with services having a variety of Qualities of Service (QoS) and security,,using a transmission speed of about 100 Mbps, access technologies (ex: admission control, scheduling, Automatic Repeast request (ARQ), Hybrid Automatic Repeast request (HARQ), suppression, compression), Convergence Sublayer (CS) classification rule, and Security Association (SA). In particular, in the current 4G communication systems, research is being conducted to support high-speed services by ensuring both mobility and QoS to Broadband Wireless Access (BWA) communication systems. Such BWA systems include a Wireless Local Area Network (WLAN) communication system and a Wireless Metropolitan Area Network (WMAN) communication system. Also, a typical 4G communication system is the Institute of Electrical and Electronics Engineers (IEEE) 802.16 communication system.

In the IEEE 802.16 wireless communication system, when it is desired to add, change, or delete a Service Flow (SF) of a Media Access Control (MAC) layer, it is respectively required to carry out a Dynamic Service Addition (DSA) process, a Dynamic Service Change (DSC) process, or a Dynamic Service Deletion (DSD) process between a Base Station (BS) and a Mobile Station (MS). The DSA process, the DSC process, and the DSD process are generically known as a DSx process. One SF can be managed through one DSx process between the BS and the MS. In brief, the DSx process signifies an exchange of a request message for corresponding management, a response message, and an acknowledgement message between the BS and the MS. For example, a DSA process for an SF requiring a QoS guarantee signifies the exchange of a Dynamic Service Addition-REQuest (DSA-REQ) message including the information of several types IDs (Service Flow IDentifer (SFID), Security Association IDentifier (SAID), and/or Traffic Connection IDentifier (TCID)/ Multicast Connection IDentifier (MCID)/ Logical Connection IDentifier (LCID)/ Multicast and Broadcast Service zone IDentifier (MBS zone ID) ), service class name, QoS parameter sets such as the Provisioned set, the admitted set and/or the active set, ARQ/HARQ parameters, suppression/compression parameters, error rate parameters, classification rules, paging preference.

One MS can simultaneously hold a plurality of SFs. However, to create the plurality of SFs, a DSA process can be performed several times. A DSA-REQ message for an SF requiring a QoS guarantee includes service flow encoding parameters such as several IDs, CS classification rules, QoS, ARQ, HARQ, suppression/compression, and error rate parameters. Because the service flow encoding parameters include a large amount of information, the DSA-REQ message requires a large transmission bandwidth. Thus, if it is intended to add a plurality of SFs at the same time, the DSA process causes an increased consumption of radio resources. Along with the additional consumption of radio resources owing to the capacity of the DSA-REQ message, more radio resources are consumed because a MAP message also increases in size. The MAP message increases in size due to the allocation of resources for an exchange of the DSA-REQ message. In addition to the DSA process, the DSC process or the DSD process is also repeatedly performed and therefore also causes an increase in consumption of radio resources.

As aforementioned, the DSx process is performed several times to manage a plurality of SFs at the same time point, thus increasing a consumption of radio resources. Accordingly, there is a need for a device and method for increasing the efficiency of utilization of radio resources by reducing the overhead caused by repeated execution of the DSx process.

### SUMMARY OF THE INVENTION

An aspect of the present invention is to address at least the above-mentioned problems and/or disadvantages and to provide at least the advantages below. Accordingly, an aspect of the present invention is to provide an apparatus and method for reducing an overhead caused by repeated execution of a Service Flow (SF) management process in a broadband wireless communication system.

Another aspect of the present invention is to provide an apparatus and method for adding, changing, or deleting a plurality of SFs through one process in a broadband wireless communication system.

The above aspects are addressed by providing an apparatus and method for SF management in a broadband wireless communication system.

According to an aspect of the present invention, a wireless access node apparatus in a broadband wireless communication system is provided. The apparatus includes a creator for creating a Service Flow (SF) management message including a Service Flow IDentifier (SFID) list consisting of a plurality of SFIDs to perform the same management for a plurality of SFs, and a transmitter for transmiting the management message created in the creator to a counterpart node.

According to another aspect of the present invention, a wireless access node apparatus in a broadband wireless communication system is provided. The apparatus includes a receiver for receiving a Service Flow (SF) management message including a Service Flow IDentifier (SFID) list consisting of a plurality of SFIDs from a counterpart node, and an analyzer for identifying management target SFs and management to be performed for the management target SFs by a batch process, by analyzing the management message.

According to a further another aspect of the present invention, a Service Flow (SF) management method of a wireless access node in a broadband wireless communication system is provided. The method includes creating a Service Flow (SF) management message including a Service Flow IDentifier (SFID) list consisting of a plurality of SFIDs to perform the same management for a plurality of SFs, and transmiting the created management message to a counterpart node.

According to a yet another aspect of the present invention, a Service Flow (SF) management method of a wireless access node in a broadband wireless communication system is provided. The method includes receiving a Service Flow (SF) management message including a Service Flow IDentifier (SFID) list consisting of a plurality of SFIDs from a counterpart node, and identifying management target SFs and management to be performed for the management target SFs by a batch process, by analyzing the management message.

According to a still another aspect of the present invention, a broadband wireless communication system supporting a Multicast and Broadcast Service (MBS) is provided. The system includes a Base Station (BS) for transmiting a Service Flow (SF) management message including a Service Flow IDentifier (SFID) list consisting of a plurality of SFIDs, and a Mobile Station (MS) for acquiring information on each of Media Access Control (MAC) layer identifiers for a plurality of broadcast channels through the management message.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings in which:

FIG. 1 is a block diagram illustrating a construction of a wireless access node in a broadband wireless communication system according to an exemplary embodiment of the present invention;

FIG. 2 is a flow diagram illustrating an SF management request process of a wireless access node in a broadband wireless communication system according to an exemplary embodiment of the present invention; and

FIG. 3 is a flow diagram illustrating an SF management response process of a wireless access node in a broadband wireless communication system according to an exemplary embodiment of the present invention.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and omitted for clarity and conciseness.

The following description of exemplary embodiments of the present invention provide a technology for reducing consumption of radio resources caused by a Service Flow (SF) addition, change, or deletion process in a broadband wireless communication system. In the following description, SF management is the general term of the SF addition, change, or deletion. The following description of exemplary embodiments is made with reference to an Orthogonal Frequency Division Multiplexing (OFDM) wireless communication system. However, it is to be understood that this is merely for example and the present invention is also identically applicable to other wireless communication systems.

In an exemplary embodiment of the invention, a plurality of SF IDentifiers (SFIDs) are included in a message for one SF management process. For example, in the case of adding two SFs, a Base Station (BS) or a Mobile Station (MS) transmits an SF addition request message including two SFIDs to a counterpart node. Thus, the SF addition request message includes a parameter representing the quantity of SFs intending to be added, a SFID list and a parameter representing whether SF encoding parameters of each of a plurality of SFs are all the same as each other. Wherein the SF encoding parameters comprises Quality of Service (QoS) parameters, Automatic Repeat request (ARQ), Hybrid Automatic Repeat request (HARQ), suppression, compression, paging preference, Security Association IDentifier (SAID), Multicast and Broadcast Service zone IDentifier (MBS zone ID), error rate and Convergence Sublayer (CS) classification rule. In an exemplary implementation, if there is a different parameter among SF encoding parameters of each of the two SFs, the BS or MS designates one SF as a reference SF, sets a SF encoding parameters of the reference SF as a reference SF encoding parameters, and then transmits different SF encoding parameters compared with the reference SF encoding parameters together with the reference SF encoding parameters. That is, in a message used to manage a plurality of SFs, SF encoding parameters are comprised of common SF encoding parameters and non-common SF encoding parameters. The term QoS profile refers to a QoS parameter set of one SF. The term QoS profile is used herein to have the same meaning throughout the following description.

In an exemplary implementation, though a plurality of SFs are created through an SF addition request message including a plurality of SFIDs, a BS, an MS, or an upper control station can distinguish and manage SF encoding parameters of each of the SFs. This is because SF encoding parameters of each SF may change through a separate SF change process.

In an exemplary embodiment of the present invention, the addition, change, or deletion of a plurality of SFs included in one process may be only partially allowed for reasons such as Call Admission Control (CAC), load balancing, etc. The management scheme is the same by SF as an existing management scheme. For example, upon request for SF addition, SFs allowed through CAC can be assigned Traffic Connection IDentifiers (TCIDs) and SFs not so allowed can be assigned only SFIDs and created in a provisioned format. The same is also applied to a return code included in an SF addition response. And, a success or a failure is marked at each SF. For reference, an R6 interface between an Access Service Network_Gateway (ASN_GW) and a BS, which is defined in Network Working Group (NWG) specification, can allow content of several SFs to be inserted into one message.

The aforementioned exemplary SF management scheme is applicable to a diversity of types of wireless communication systems. For example, the present invention is applicable to a Multicast and Broadcast Service (MBS) system as follows. MBS is a service of simultaneously providing multimedia content to a plurality of MSs using a broadband wireless communication network. In the MBS, various broadcast channels such as 384Kbps high-definition video and 64Kbps high-fidelity audio are simultaneously provided to a plurality of MSs by increasing a transfer rate using a technique of macro diversity based on an MBS zone.

In general, a plurality of MBS broadcast channels exist in one MBS zone and an MS can acquire a Multicast Connection IDentifier (MCID) through an SF addition process so as to use a specific MBS broadcast channel. The MCID is a broadcast channel identifier of a Media Access Control (MAC) layer necessary for distinguishing a data burst by broadcast channel. As a way to reduce a broadcast channel change time, the MS previously acquires MCIDs of all MBS broadcast channels existing in an MBS zone where the MS is currently located. For this, the MS can perform an SF addition process repeatedly, that is, for each MBS broadcast channel. However, according to an exemplary embodiment of the present invention, an MS can acquire MCIDs of all MBS broadcast channels using a one-time SF addition process. And, if there are multiple MBS zones in the same area, an MS can acquire MCIDs of multiple MBS zone IDs using a one-time SF addition process.

If a user of the MS, having previously acquired the plurality of MCIDs, intends to change a broadcast channel, an application layer of the MS requests an MAC layer to transmit traffic of a corresponding broadcast channel. However, the application layer and the MAC layer have a broadcast content ID and the corresponding broadcast channel Internet Protocol (IP) address, and an MCID or Logical Channel IDentifier (LCID) as broadcast channel identifiers, respectively, and therefore, the application layer or the MAC layer can be aware of a relationship between the broadcast channel identifiers of the two layers such as between the application layer and MAC layer or between IP layer and MAC layer for the selective decoding at MAC layer. Generally, the relationship between the application layer and IP layer is given in the service guide via the application layer. That is, the MS can receive a mapping table showing the relationship between the broadcast channel identifiers of the respective two layers from an MBS server and manage the received mapping table for the selective decoding at MAC layer. At this time, according to an exemplary embodiment of the present invention, an MS can receive a mapping table through an SF addition process.

The relationship information is not necessarily delivered through the application layer only. That is, the MS can acquire the relationship information by together delivering an identifier of a corresponding different layer at the time the identifier of the MAC layer is delivered. That is, according to an exemplary embodiment, not only a name tag of the MAC layer but also a broadcast content ID and a broadcast channel Internet Protocol (IP) address can be delivered as QoS parameters when the SF addition process is performed. Here, the broadcast content ID represents the broadcast channel identifier of the application layer, and the broadcast channel IP address represents a broadcast channel identifier of an IP layer.

A diversity of content can be provided using the MBS. Moreover, each of the content can apply unique encryption. In general, MAC layer encryption is performed not on a per-content basis but on a per-user basis. However, in the MBS, the MAC layer encryption may be performed on a per-content basis. In this case, an MS using the MBS can acquire a content unique MBS key. According to an exemplary embodiment of the present invention, the MBS key can be delivered as a QoS parameter at the time the SF addition process is performed.

Irrespective of execution or non-execution of the application layer encryption on a per-content basis, when the MAC layer encryption is performed, an encryption subject can vary depending on a synchronization subject. In general, if an ASN_GW takes charge of time stamping and packetization, a Core Service Network (CSN) becomes the encryption subject. However, in an exemplary implementation of the present invention, an ASN_GW becomes the encryption subject. As a scheme to deliver an encryption key at the time an SF addition process is performed, there are two potential schemes which are described below.

First, a Key Driving Function (KDF) may be provided to each of a CSN, an ASN_GW, and an MS. Also, a random seed may be delivered to the MS as an input of the KDF calculating an encryption key.

Second, an ASN_GW delivers an encryption key without separately providing a KDF to an MS.

In each of the two schemes, updating is periodically performed whenever a MAC layer encryption policy (e.g., a KDF), an encryption key, or a random seed is changed in compliance with a service provider policy established between a CSN and an ASN_GW. Between the ASN_GW and the MS, encryption information is delivered at the time the SF addition process is performed. Here, the CSN can be an Authentication Authorization Accounting (AAA) server, an MBS server, or an MBS server controller. Even if an interface with the ASN_GW serves as an MBS server, the MBS server can acquire encryption related information in association with the AAA server. In the scheme in which the ASN_GW delivers an encryption key, the ASN_GW may create an encryption key, receiving a random seed. Alternatively, the ASN_GW may use an encryption key created by the CSN for MAC layer encryption as it is and deliver the encryption key to the MS. The proposed exemplary schemes of the present invention are also identically applicable to other MAC layer call management processes.

Operations taking place when an MS uses an MBS in an MBS system applying exemplary embodiments of the present invention are described below.

First, if an MS intends to use an MBS, the MS acquires MCIDs of all broadcast channels existing in an MBS zone through an SF addition process. That is, the MS transmits an SF addition request message to a BS and the BS transmits an SF addition response message including a plurality of the MCIDs to the MS. The SF addition response message can include not only the plurality of MCIDs but also information on a mapping table for broadcast channel identifiers between layers or information on a broadcast channel identifier of a different layer corresponding to each of the plurality of MCIDs. Also, the SF addition response message can include content unique MBS key information.

Then, if the MS intends to change a broadcast channel, the MS changes only management data of an application layer through an internal communication between the application layer and an MAC layer without an additional SF addition process. That is, the application layer instructs the MAC layer to deliver traffic of the broadcast channel. At this time, a relationship can be identified between broadcast channel identifiers of the application layer and the MAC layer. This can be implemented in the application layer or the MAC layer. In other words, the application layer or the MAC layer that manages interlayer identifier mapping information performs identifier conversion.

Construction and operation of a wireless access node performing the aforementioned SF management are described below in more detail with reference to the accompanying drawings. Wherein, the term wireless access node refers to a node that is able to access a wireless channel. The wireless access node represents a device for creating and analyzing an SF management message for a MAC layer. The wireless access node can be a BS or an MS.

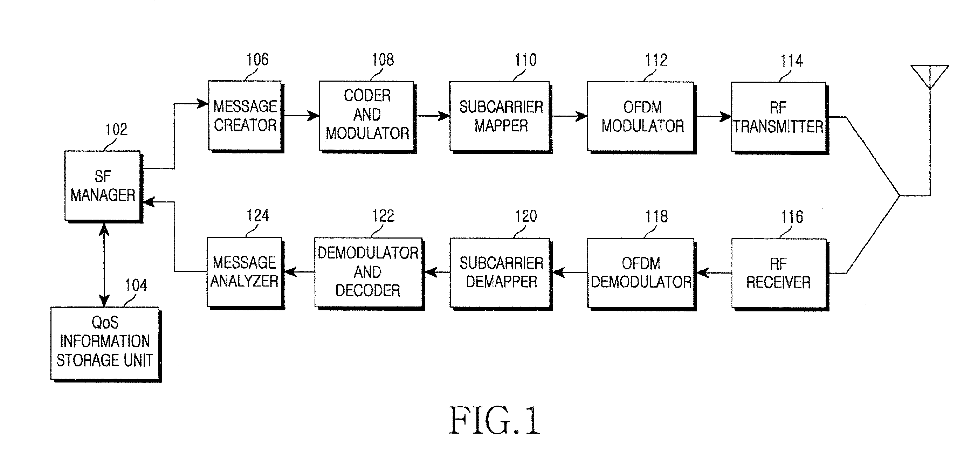

FIG. 1 is a block diagram illustrating a construction of a wireless access node in a broadband wireless communication system according to an exemplary embodiment of the present invention.

As shown in FIG. 1, the wireless access node includes an SF manager 102, a QoS information storage unit 104, a message creator 106, a coder and modulator 108, a subcarrier mapper 110, an OFDM modulator 112, a Radio Frequency (RF) transmitter 114, an RF receiver 116, an OFDM demodulator 118, a subcarrier demapper 120, a demodulator and decoder 122, and a message analyzer 124.

The SF manager 102 manages an SF with a counterpart node. In other words, the SF manager 102 performs a control for traffic transmission/reception by SF with the counterpart node and SF addition, change, and deletion. The term SF change refers to a change of SF endocing parameters of an SF. For example, upon transmiting a request for SF addition, change, or deletion to the counterpart node, the SF manager 102 recognizes that there is a need to add, change, or delete an SF by detecting a trigger from a different component within the wireless communication system or a user's manipulation and controls the message creator 106 to create a corresponding SF management request message. Upon receiving a request for SF addition, change, or deletion from the counterpart node, the SF manager 102 determines whether it can manage the request and adds, changes, or deletes an SF in response to the request. The SF manager 102 uses, for example, a DSA-REQ message for the SF addition request, uses a DSC-REQ message for the SF change request, and uses a DSD-REQ message for the SF deletion request.

In an exemplary implementation, the SF manager 102 manages a plurality of SFs needing the same management by one process. In other words, the SF manager 102 controls the message creator 106 to create an SF management message including a plurality of SF identifiers. If an SF management message including a plurality of SF identifiers is received from the counterpart node, the SF manager 102, using a batch process, creates, changes, or deletes the SFs corresponding to the plurality of SF identifiers. However, though the plurality of SFs are batchly managed through one process, the SF manager 102 manages each of the SFs separately. This is because the plurality of SFs created through one process each can be deleted or changed through a separate process.

The QoS information storage unit 104 stores SF encoding parameters of each SF managed by the SF manager 102. The SF encoding parameters can be changed through an SF change process.

The message creator 106 creates a message for SF addition, change, or deletion under the control of the SF manager 102. In an exemplary implementation, the message creator 106 creates an SF management message including a SFID list consisting of a plurality of SFIDs. For example, in the case of transmiting an SF management request message to the counterpart node, the message creator 106 includes, in the SF management request message, information on the quantity of SFs, which intend to be managed through one process. In the case of an SF addition or change message including SF encoding parameters, the message creator 106 includes, in the SF addition or change message, a parameter representing whether SF encoding parameters of each of a plurality of SFs are all the same as each other. If the SF encoding parameters of each of the plurality of SFs are not all the same as each other, the message creator 106 includes reference SF designation information, reference SF encoding parameters, and different SF encoding parameters compared with a reference SF encoding parameters, in the SF addition or change message. The reference SF encoding parameters is SF encoding parameters of the reference SF. In the case of transmiting an SF management response message to the counterpart node, the message creator 106 creates the SF management response message for informing that a requested management is possible as the determination result of the SF manager 102.

If the wireless access node is included in an MBS system, the SF management message can include a plurality of MCIDs, a plurality of logical channel IDs, a plurality of broadcast content IDs and broadcast channel IPs each corresponding to the MCIDs, interlayer identifier mapping table information, MBS key information on a per-content basis, etc.

The coder and modulator 108 codes an information bit stream provided according to a corresponding coding rate to convert the information bit stream into a coding bit stream and modulates the coding bit stream according to a corresponding modulation scheme to convert the coding bit stream into a complex symbol. The subcarrier demapper 110 maps the complex symbols from the coder and modulator 108 to a corresponding subcarrier resource. The OFDM modulator 112 converts the complex symbols mapped to the subcarrier into an OFDM symbol by Inverse Fast Fourier Transform (IFFT) operation. The RF transmitter 114 converts a baseband signal into an RF band signal and transmits the RF band signal to the counterpart node through an antenna.

The RF receiver 116 converts an RF band signal received through the antenna into a baseband signal. The OFDM demodulator 118 converts an OFDM symbol into complex symbols by subcarrier through Fast Fourier Transform (FFT) operation. The subcarrier demapper 120 restores the complex symbols mapped to a subcarrier to a format before mapping. If the subcarrier demapper 120 is included in an MS, the subcarrier demapper 120 extracts only a signal mapped to an allocated subcarrier. On the other hand, if the subcarrier demapper 120 is included in a BS, the subcarrier demapper 120 distinguishes a burst by MS and arranges the signals accordingly. The demodulator and decoder 122 demodulates a complex symbol according to a corresponding demodulation scheme to convert the complex symbol into a coding bit stream and decodes the coding bit stream according to a corresponding coding rate to convert the coding bit stream into an information bit stream.

The message analyzer 124 analyzes a message for SF addition, change, or deletion received from the counterpart node. In an exemplary embodiment, the message analyzer 124 analyzes an SF management message including a SFID list. For example, in the case of receiving an SF management request message from the counterpart node, the message analyzer 124 identifies the quantity of SFs intending to be managed through the received SF management request message. In the case of an SF addition or change message including SF encoding parameters, the message analyzer 124 identifies whether SF encoding parameters of each of a plurality of SFs are all the same as each other. If the SF encoding parameters of each of the plurality of SFs are not all the same as each other, the message analyzer 124 identifies a reference SF and SF encoding parameters and identifies different SF encoding parameters compared with the reference SF encoding parameters. In the case of receiving an SF management response message from the counterpart node, the message analyzer 124 identifies that a requested management is possible through the SF management response message and informs the SF manager 102.

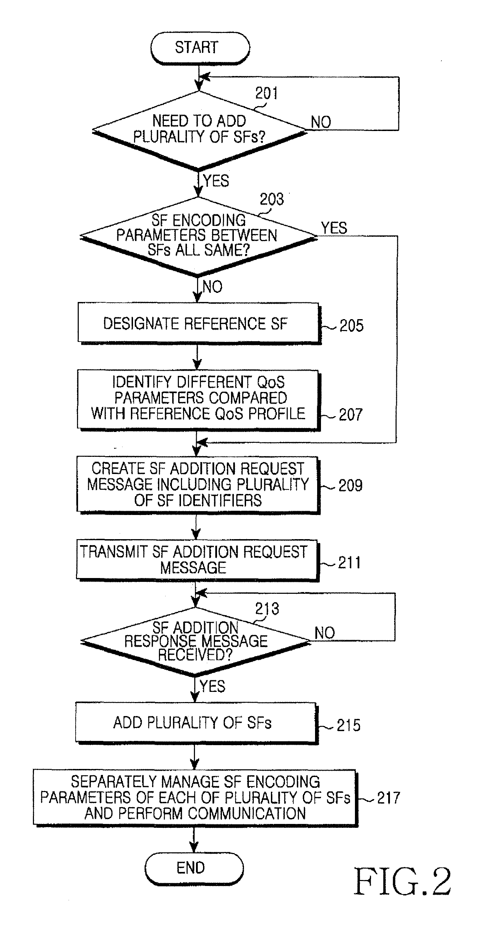

FIG. 2 is a flow diagram illustrating an SF management request process of a wireless access node in a broadband wireless communication system according to an exemplary embodiment of the present invention.

As shown in FIG. 2, the wireless access node determines whether there is a need to add a plurality of SFs in step 201. For example, the wireless access node can recognize that there is a need to create an SF by detecting a trigger from a different component within the wireless communication system or a user's manipulation.

If it is determined that there is a need to add the plurality of SFs, the wireless access node identifies whether SF encoding parameters between the plurality of SFs are all the same as each other in step 203. Otherwise, the wireless access node repeatedly performs step 201. If the SF encoding parameters between the plurality of SFs are all the same as each other, the wireless access node proceeds to step 209.

If it is determined that the SF encoding parameters between the plurality of SFs are not all the same as each other in step 203, the wireless access node designates a reference SF from among the plurality of SFs in step 205. SF encoding parameters of the reference SF serve as a reference SF encoding parameters for QoS parameters of the remaining SFs.

After the reference SF is designated, the wireless access node identifies different SF encoding parameters compared with the reference SF encoding parameters from among SF encoding parameters of an SF other than the reference SF in step 207. That is, the wireless access node identifies SF encoding parameters that can be additionally included in a message besides the reference SF encoding parameters information.

In step 209, the wireless access node creates an SF addition request message including a SFID list. The SF addition request message may include information on whether SF encoding parameters between a plurality of SFs are all the same as each other, reference SF designation information, reference SF encoding parameters, and information on different SF encoding parameters of a remaining SF compared with a referenceSF encoding parameters.

After the SF addition request message is created, the wireless access node transmits the SF addition request message to a counterpart node in step 211. At this time, the wireless access node converts a bit stream of the SF addition request message into complex symbols, converts the complex symbols into a baseband OFDM symbol through an IFFT operation, and then converts a baseband signal into an RF band signal for transmiting.

After the SF addition request message is sent, the wireless access node determines whether it receives an SF addition response message from the counterpart node in step 213. That is, the wireless access node identifies whether the counterpart node acknowledges the addition of the plurality of SFs.

If the SF addition response message is received, the wireless access node adds the plurality of SFs using a batch process in step 215. That is, the wireless access node sets logical management paths for each of the plurality of SFs. Otherwise, the wireless access node repeatedly performs step 213.

In step 217, the wireless access node separately manages SF encoding parameters of each of the plurality of SFs and transmits/receives traffic for each SF.

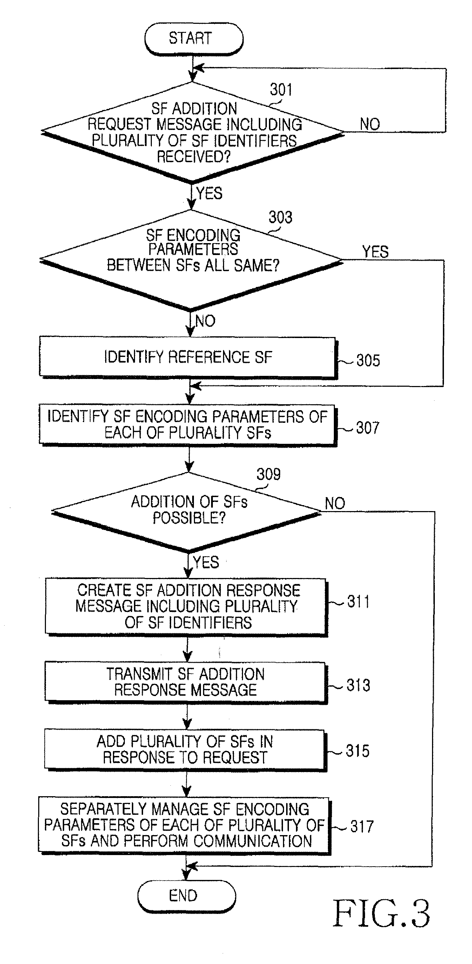

FIG. 3 is a flow diagram illustrating an SF management response process of a wireless access node in a broadband wireless communication system according to an exemplary embodiment of the present invention.

Referring to FIG. 3, in step 301, the wireless access node determines whether it receives an SF addition request message including a SFID list.

If the SF addition request message is received, the wireless access node determines whether SF encoding parameters of each of the plurality of SFs are all the same as each other in step 303. Otherwise, the wireless access node repeatedly performs step 301. Whether the SF encoding parameters are the same is determined through information included in the SF addition request message. If it is determined that the SF encoding parameters of each of the plurality of SFs are all the same in the step 303, the wireless access node proceeds to step 307.

If it is determined the SF encoding parameters of each of the plurality of SFs are not all the same in step 303, the wireless access node identifies a reference SF among the plurality of SFs in step 305. The reference SF is identified through information included in the SF addition request message.

After the reference SF is identified, the wireless access node identifies SF encoding parameters of each of the plurality of SFs in step 307. If it is determined that the SF encoding parameters of each of the plurality of SFs are all the same as each other in step 303, the wireless access node identically applies same SF encoding parameters included in the SF addition request message to each of the plurality of SFs. If it is determined that the SF encoding parameters of each of the plurality of SFs are not all the same as each other in step 303, the wireless access node identifies SF encoding parameters of the reference SF through reference SF encoding parameters included in the SF addition request message and identifies SF encoding parameters of the remaining SFs by substituting additional SF encoding parameters from the referenceSF encoding parameters.

Then, in step 309, the wireless access node determines whether it is possible to add the plurality of SFs as requested. For example, whether it is possible to add the plurality of SFs can be determined in consideration of a resource status, etc.

If it is determined that it is possible to add the plurality of SFs, the wireless access node creates an SF addition response message including a SFID list in step 311. That is, the wireless access node creates an SF addition response message providing an acknowledgement of an SF addition request from an counterpart node.

After the SF addition response message is created, the wireless access node transmits the SF addition response message to the counterpart node in step 313. At this time, the wireless access node converts a bit stream of the SF addition response message into complex symbols, converts the complex symbols into a baseband OFDM symbol through an IFFT operation, and then converts a baseband signal into an RF band signal for transmiting.

After the SF addition response message is sent, the wireless access node adds the plurality of SFs using a batch process in step 315. That is, the wireless access node sets logical management paths for each of the plurality of SFs.

In step 317, the wireless access node separately manages SF encoding parameters of each of the plurality of SFs and transmits/receives traffic for each SF.

In exemplary embodiments as described with reference to FIGs. 2 and 3, a plurality of SFs are added through one process. Though not described with reference to the accompanying drawings, a process of changing or deleting a plurality of SFs by one process may also be preformed in a similar manner to that of FIGs. 2 and 3. However, in the case of deleting the plurality of SFs through one process, steps of identifying whether SF encoding parameters between a plurality of SFs are the same, designating a reference SF, identifying SF encoding parameters, etc. can be omitted.

If the wireless access node is included in an MBS system, the SF management message can include a plurality of MCIDs, a plurality of logical channel IDs, a plurality of broadcast content IDs and broadcast channel IPs each corresponding to the MCIDs, interlayer identifier mapping table information, MBS key information on a per-content basis, etc.

In exemplary embodiments of the present invention, the efficiency of radio resources and a QoS can be improved by adding, changing, or deleting a plurality of SFs through one SF management process in a broadband wireless communication system.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A wireless access node apparatus in a broadband wireless communication system, the apparatus comprising:
a creator(106) for creating a Service Flow (SF) management message comprising a plurality of SF identifiers to perform the same management for a plurality of SFs; and
a transmitter(114) for transmiting the management message created in the creator to a counterpart node.

2. A wireless access node apparatus in a broadband wireless communication system, the apparatus comprising:
a receiver(116) for receiving a Service Flow (SF) management message comprising a plurality of SF identifiers from a counterpart node; and
an analyzer(124) for identifying management target SFs and management to be performed for the management target SFs by a batch process, by analyzing the management message.

3. The apparatus of claim 1 or the apparatus of claim 2, respectively, further comprising: a manager(102) for performing at least one of creating, changing, and deleting the plurality of SFs by a batch process in response to the management message.

4. A Service Flow (SF) management method of a wireless access node in a broadband wireless communication system, the method comprising:
creating a Service Flow (SF) management message comprising a plurality of SF identifiers to perform the same management for a plurality of SFs; and
transmiting the created management message to a counterpart node.

5. A Service Flow (SF) management method of a wireless access node in a broadband wireless communication system, the method comprising:
receiving a Service Flow (SF) management message comprising a plurality of SF identifiers from a counterpart node; and
identifying management target SFs and management to be performed for the management target SFs by a batch process, by analyzing the management message.

6. The method of claim 4 or the method of claim 5, respectively, further comprising: performing at least one of creating, changing, and deleting the plurality of SFs by a batch process in response to the management message.

7. The apparatus of claim 1, the apparatus of claim 2, the method of claim 4 or the method of claim 5, respectively, wherein the management message comprises at least one of a message for adding an SF, a message for changing at least one of SF encoding parameters of an SF, and a message for deleting an SF.

8. The apparatus of claim 1, the apparatus of claim 2, the method of claim 4 or the method of claim 5, respectively, wherein the opponent node comprises at least one of a Mobile Station (MS) and a Base Station (BS).

9. The apparatus of claim 1, the apparatus of claim 2, the method of claim 4 or the method of claim 5, respectively, wherein the management message comprises at least one of information on the quantity of SFs, reference SF designation information, information on the reference SF encoding parameters that are SF encoding parameters of a reference SF, and information on at least one of different SF encoding parameters of an SF other than the reference SF compared with the reference SF encoding parameters.

10. A broadband wireless communication system supporting a Multicast and Broadcast Service (MBS), the system comprising:
a Base Station (BS) for transmiting a Service Flow (SF) management message comprising a Service Flow IDentifier (SFID) list consisting of a plurality of SFIDs; and
a Mobile Station (MS) for acquiring information on each of Media Access Control (MAC) layer identifiers for a plurality of broadcast channels through the management message.

11. The system of claim 10, wherein the management message comprises at least one of a message for adding an SF, a message for changing at least one of SF encoding parameters of an SF, and a message for deleting an SF.

12. The system of claim 10, wherein the management message comprises at least one of common SF encoding parameters, the quantity of the plurality of SFs, the SFID list, and non-common SF encoding parameters.

13. The system of claim 10, wherein the MAC layer identifier comprises at least one of a Multicast Connection IDentifier (MCID) and a logical channel ID.

14. The system of claim 10, wherein, through the management message, the MS acquires at least one of information on a broadcast channel identifier of an Internet Protocol (IP) layer or an application layer corresponding to each of a plurality of MCIDs, information on a mapping table representing a relationship between the MAC layer identifier for the broadcast channel and the IP layer identifier or application layer identifier, and information on an encryption key on a per-content basis for each content provided through the MBS.
